**Europäisches Patentamt**

**(19)** **European Patent Office**

**Office européen des brevets**

**(11)** Publication number : **0 345 556 B1**

**(12)** # EUROPEAN PATENT SPECIFICATION

**(45)** Date of publication of patent specification :
03.05.95 Bulletin 95/18

**(51)** Int. Cl.⁶ : **G05D 13/62,** G01P 3/48,
G11B 19/28

**(21)** Application number : 89109482.3

**(22)** Date of filing : 26.05.89

**(54)** Counter circuitry for motor rotation speed control circuitry.

**(30)** Priority : 26.05.88 JP 129069/88

**(43)** Date of publication of application :
13.12.89 Bulletin 89/50

**(45)** Publication of the grant of the patent :
03.05.95 Bulletin 95/18

**(84)** Designated Contracting States :
DE FR GB

**(56)** References cited :
EP-A- 0 061 824
EP-A- 0 247 624
DE-A- 2 205 176
US-A- 3 950 682

**(73)** Proprietor : **FUJITSU LIMITED**
**1015, Kamikodanaka**
**Nakahara-ku**
**Kawasaki-shi Kanagawa 211 (JP)**

**(72)** Inventor : **Tsurumi, Hiroshi c/o Fujitsu Limited**
**Patent Department**
**1015 Kamikodanaka**
**Nakahara-ku**
**Kawasaki-shi Kanagawa 211 (JP)**

**(74)** Representative : **Sunderland, James Harry et al**
**HASELTINE LAKE & CO**
**Hazlitt House**
**28 Southampton Buildings**
**Chancery Lane**
**London WC2A 1AT (GB)**

## Description

The present invention relates to counter circuitry for motor rotation speed control circuitry, and to motor speed control circuitry for example a large-scale integrated circuit (LSI) for controlling motor rotation speed.

In recent years, there has been a trend towards building computer systems in compact sizes. Accordingly, to permit miniaturisation of circuit boards, circuits are generally fabricated in LSIs. This same trend has been manifest for motor rotation speed control circuits, for keeping rotational speed of a motor, of a magnetic disk device for instance, at a desired target speed.

For controlling the rotational speed of a motor, clock pulses originally provided for a main computer system have been utilised for measuring the cycle time of motor rotation.

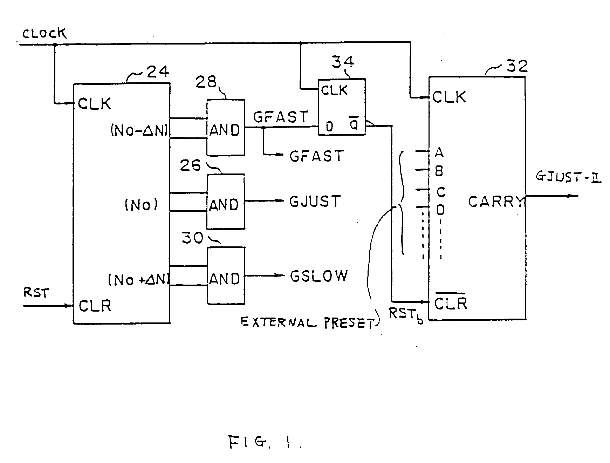

Amongst several methods of digitally controlling motor speed, there has been devised a method employing two counters. A previously proposed circuit configuration employing two counters is shown in Fig. 1. In Fig. 1, 24 is a first counter to which a reset signal RST is input, at a clear terminal CLR, for each rotation of a motor, and to which clock pulses of a predetermined constant frequency are input at a clock terminal CLK. On receiving a reset signal RST the first counter 24 resumes counting clock pulses, after clearing the previously counted number, until the next reset signal is received. Thus a count-number is obtained which is proportional to a cycle time $T_n$ of motor rotation.

The first counter 24 is provided with an AND gate 26, in order to detect a target count-number $N_0$ which number of clock pulses corresponds to the motor's desired target speed. Input terminals of the AND gate 26 are selectively connected to parallel bit-outputs, which together designate the target count-number $N_0$, of the first counter 24. Assuming a target motor rotation cycle time corresponding to the target motor speed is $T_0$, the number of clock pulses to be counted, i.e. the target count-number $N_0$, is given as follows:-

$N_0 = T_0$/clock pulse cycle time.

Thus, the moment at which the counted clock pulse number reaches the target count-number $N_0$ is detected by the enabled AND gate 26, which then outputs a target speed detection signal GJUST.

The first counter 24 is further provided with a second AND gate 28, for outputting a fast-speed detection signal GFAST, and a third AND gate 30, for outputting a slow-speed signal GSLOW, as follows.

Assuming that the detection ranges or points of the fast-speed signal and the slow-speed signal are set at, for example, ± 0.5% of the target count-number $N_0$, input terminals of the AND gate 28 are connected selectively to bit-outputs of the first counter 24 such that a count-number $(N_0 - \Delta N)$ 0.5% lower than the tar-

get count-number $N_0$ is detected; and input terminals of the third AND gate 30 are connected selectively to bit-outputs of the first counter 24 such that a count-number $(N_0 + \Delta N)$ 0.5% higher than the target count-number $N_0$ is detected.

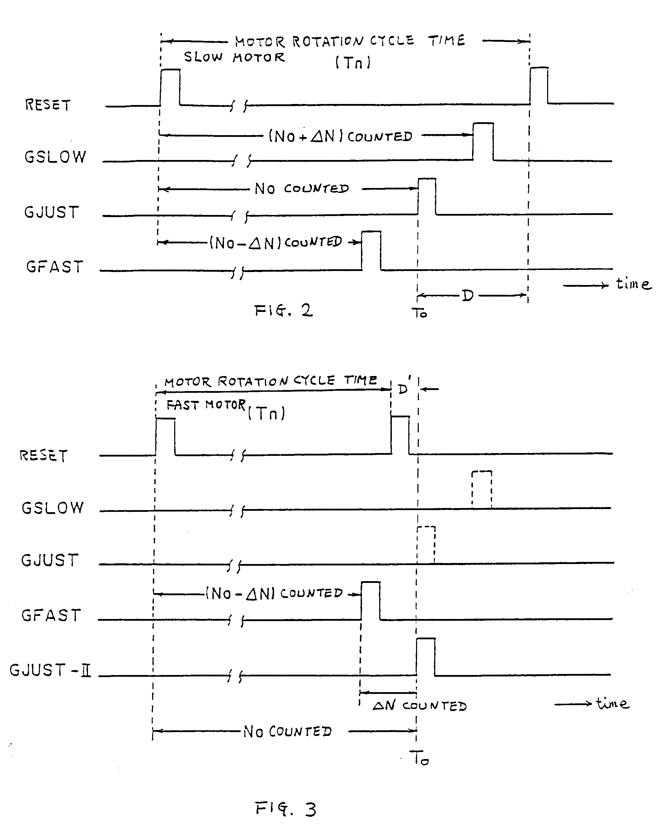

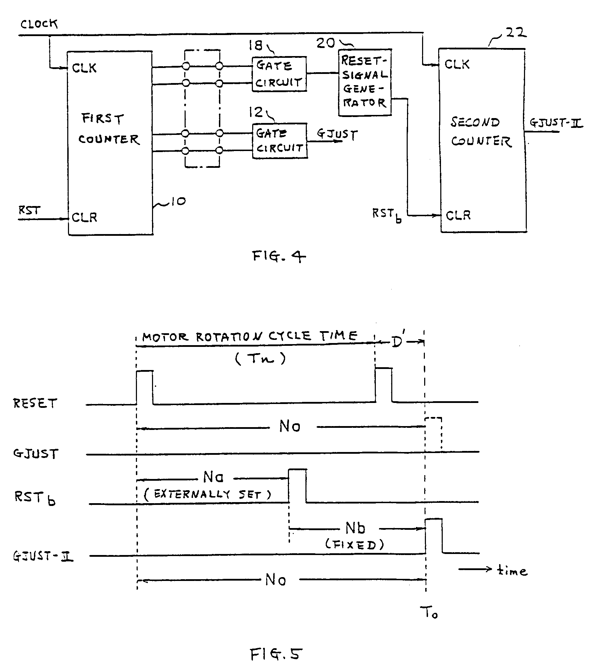

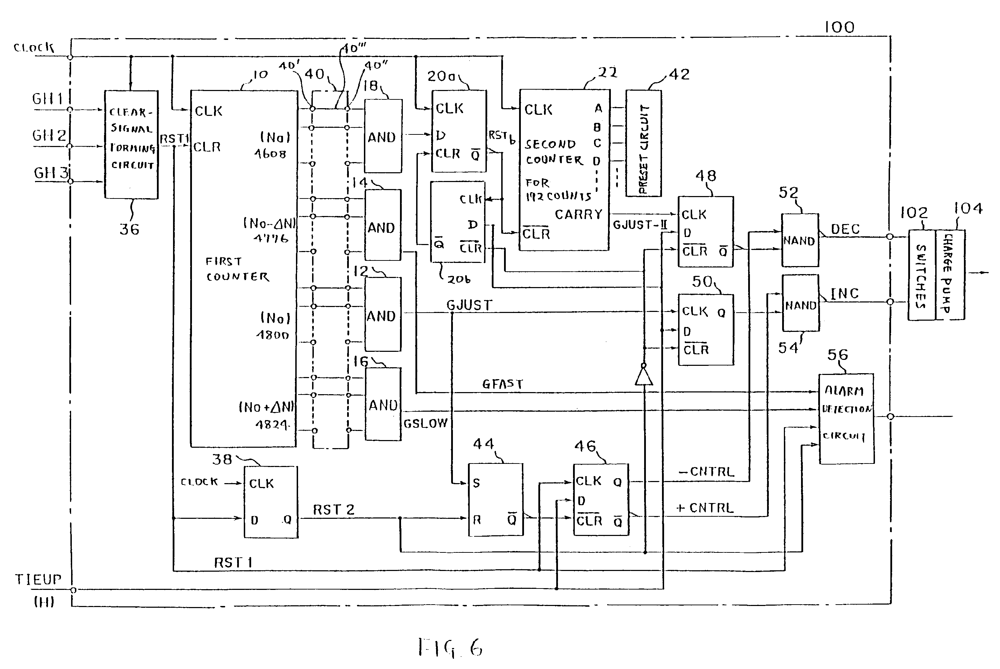

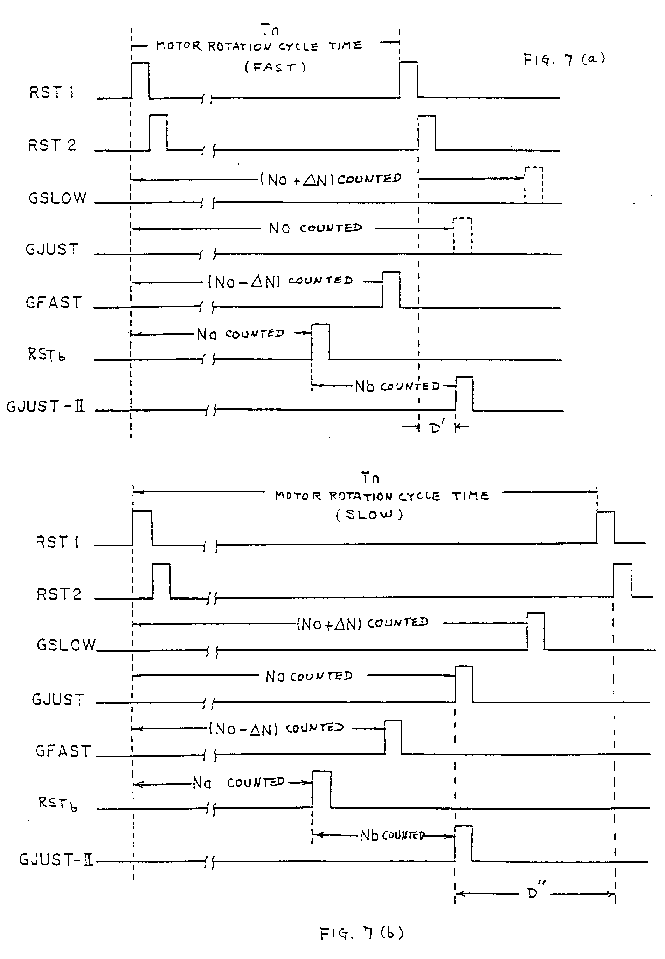

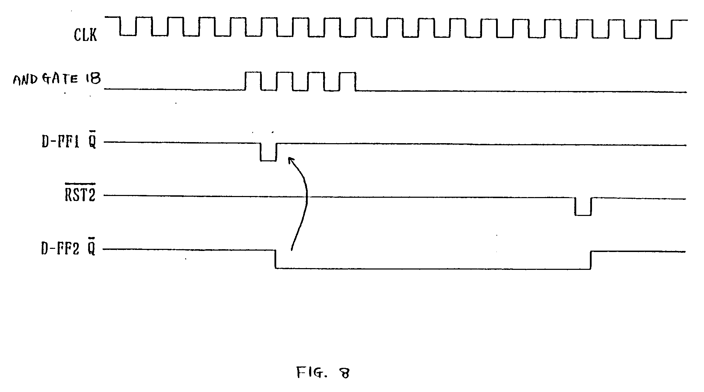

Figs. 2 and 3 are for assistance in explaining operations of the first counter 24, having three AND gates 26, 28 and 30, of Fig. 1.

When motor rotation speed is slower than the target rotation speed, as illustrated in Fig. 2, the motor rotation cycle time $T_n$, determined (starting) from a reset signal RST, is longer than $T_0$. Consequently, after receiving the one reset signal and before receiving the next reset signal, the fast-speed detection signal GFAST is firstly output when the count-number of the counter 24 reaches $(N_0 - \Delta N)$; then the target speed detection signal GJUST is output when the count-number reaches the target count-number $N_0$; and furthermore the slow-speed detection signal GSLOW is thereafter output when the count-number reaches $(N_0 + \Delta N)$. The motor speed control circuit controls motor speed so as to increase the motor speed, depending on the size of deviation D - see Fig. 2 - of the next reset signal RST from the target speed detection signal GJUST and also issues a signal for, for example, controlling other related circuits, etc., in accordance with the low-speed detection signal GSLOW.

When the motor rotation speed is fast (becomes faster than the target rotation speed) as shown in Fig. 3, the motor rotation cycle time $T_n$ determined by the reset signals RST is shorter than the target rotation cycle time $T_0$. Therefore, after one reset signal the first counter 24 is reset by the next reset signal RST before reaching the target count-number $N_0$; consequently, the target speed detection signal GJUST cannot be output.

Therefore, in the circuit of Fig. 1, there are further provided a reset-signal generator (a D-type flip-flop) and a second counter 32, so that a target speed detection signal can be output even when the motor speed is increased (is fast, e.g. as in Fig. 3). The reset-signal generator 34 outputs its $\overline{Q}$ output, as a reset-signal $RST_b$, when receiving a first pulse of the output GFAST of the AND-gate 28 for each rotation cycle. The reset-signal $RST_b$ is input to counter 32 at a clear terminal $\overline{CLR}$ of the counter, and the clock pulses are input at a clock terminal CLK of the counter. Furthermore, preset-data terminals A, B, C, D, ... of the second counter 32 are externally set, by application of H or L levels thereto, so as to set a count-number $\Delta N$, which is to be counted after the output of the fast-speed detection signal GFAST until a timing at which the target speed detection signal GJUST is or should be output. The second counter 32 outputs a carry signal CARRY when the count-number reaches the preset count-number $\Delta N$. This carry output is referred to as a second target-speed detection signal GJUST-II, which functions in place of the lost target-speed detection signal GJUST.

Summarising the functions of the circuit of Fig. 1:- when motor rotation speed is fast, the fast-speed signal GFAST is firstly output, upon detection of the count-number $(N_0 - \Delta N)$ of the first counter 24, by AND gate 28, D-FF (D-type flip-flop) 34 is set in clock pulse synchronisation therewith so as to make its $\overline{Q}$ output L; then the second counter 32 is cleared to start counting clock pulses; and on counting the preset count-number $\Delta N$ the carry is output as the second target speed detection signal GJUST-II.

However, there is a problem with the above-described motor rotation speed control circuit in that, when the target rotation speed is required to be modified, the count-numbers to be detected by AND gates 26, 28 and 30 and the preset count-number of the second counter 32 must all be modified. Such modifications of the count-numbers can be effected only by modifying the connections of the data pins led out of the counters 24 and 32. Therefore, in a case where the entire control circuit is fabricated in LSI, the data pins of the counters 24 and 32 must be externally led out of the LSI package, in order to permit such modification, causing an increase in the number of external data pins. Accordingly, the size, as well as the cost, of the LSI package is increased.

EP-A-0 247 624 discloses a motor speed control system using two counters as timers.

EP-A-0 061 824 disclosed a digital speed control device for a motor which uses two counters and detects the amount by which a measured actual time period, indicative of rotation of the motor, exceeds a reference time period.

According to the present invention there is provided counter circuitry, comprising:-

a first counter for counting clock pulses input thereto, during an interval between consecutive first reset-signals each of which clears the first counter;

a first gate circuit operable to detect when the first counter reaches a predetermined target count-number, corresponding to a desired count-number, and to provide first target detection signal;

a second gate circuit operable to detect when the first counter reaches a predetermined first reference count-number and to generate a first reference count-number detection signal;

a reset-signal generator operable to provide a second reset-signal in response to initial generation of the first reference count-number detection signal; and

a second counter, permanently preset with a predetermined second reference count-number corresponding to a difference between the target count-number and the first reference count-number, operable to count clock signals input thereto after being reset by said second reset-signal, the second count providing a second target detection signal when it reaches the second reference count-number.

The present invention provides counter circuitry suitable for motor speed control circuitry.

The present invention provides motor speed control circuitry using counter circuitry.

An embodiment of the present invention can provide motor speed control circuitry fabricated in an LSI, which LSI can be applied for control to differing motor speeds, with a minimum or reduced number of externally led-out pins.

An embodiment of the present invention can provide an LSI circuit suitable for digital control of motor rotation speed, employing two counters for counting a number of clock pulses.

The counter circuitry included in a motor speed control circuit in accordance with an embodiment of the present invention comprises:-

a first counter which is reset by a reset signal generated upon each single rotation of the motor and then counts clock pulses until a next such reset signal is received;

a first gate circuit which detects when the first counter reaches a predetermined target count-number $N_0$, which corresponds to a target speed for motor rotation, and then outputs a target speed detection signal;

a second gate circuit which detects when the first counter reaches a first reference count-number $N_a$ which is smaller than any probable minimum count-number which might be counted by the first counter (between reset signals), so as to output a first reference count-number detection signal; and

a reset signal generator which outputs a reset signal to a second counter when a first output of the second gate circuit indicating attainment of the first reference count number is received; and

the second counter, in which a predetermined second reference count-number $N_b$, which is $N_0 - N_a$, is permanently preset, and which counts clock pulses after being cleared by the reset signal output by the reset-signal generator and which outputs a second reference count-number detection signal when the second counter counts up to the preset count-number.

The fact that the second counter has a fixed preset count-number means that the need for externally led out connection pins for setting the second reference count-number $N_b$ is eliminated. Only connection pins for connecting the first counter to the gate circuits need be externally led out, so that modification of the target count-number, etc., can be effected. An output of the second counter functions in place of the target count-number detection signal when the motor rotation is faster than the target speed, where the first counter cannot output the target count-number $N_0$.

Reference is made, by way of example, to the accompanying drawings, in which:-

Fig. 1 is a block diagram of a previously proposed counter circuit configuration using two counters,

Fig. 2 is a timing chart of operation of the configuration of Fig. 1 when motor rotation speed is slow,

Fig. 3 is a timing chart of operation of the configuration of Fig. 1 when motor rotation speed is fast,

Fig. 4 is a schematic block diagram illustrating basic configuration of an embodiment of the present invention.

Fig. 5 is a timing chart of operation of the configuration of Fig. 4,

Fig. 6 is a schematic block diagram illustrating detailed circuit configuration of an embodiment of the present invention,

Fig. 7(a) is a timing chart of operation of the circuit configuration of Fig. 6 when motor rotation speed is fast,

Fig. 7(b) is a timing chart of operation of the circuit configuration of Fig. 6 when motor rotation speed is slow,

Fig. 8 is a timing chart of operation of a reset-signal forming circuit for a second counter of Fig. 6.

Fig. 9 is a timing chart of operation of speed control circuitry, for determining duration of acceleration and for deceleration, used in the circuit configuration of Fig. 6.

Fig. 10 is a schematic block diagram of circuit configuration of a reset-signal forming circuit for a first counter of Fig. 6,

Fig. 11 is a timing chart of operation of the reset-signal forming circuit of Fig. 10, and

Fig. 12 is a schematic diagram illustrating details of a first counter and AND gates connected thereto.

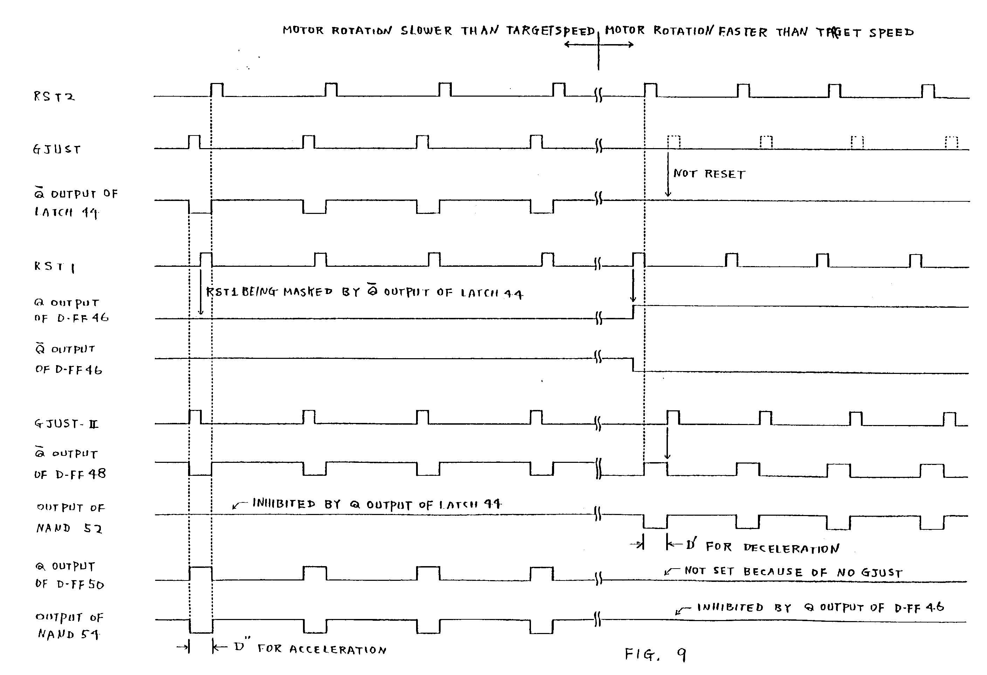

The basic configuration of motor speed control circuitry embodying the present invention using counter circuitry in accordance with an embodiment of the invention, is illustrated in Fig. 4 in which a first counter 10 is reset by a reset signal RST generated upon each single rotation of a motor (not shown in the Figures) which is to be speed-controlled, and then counts clock pulses, input to the counter's clock pulse terminal CLK, until the next reset signal RST is received. Input terminals of a first gate circuit 12, constituted by an AND gate for example, are selectively connected to bit-outputs of the first counter 10 so as to detect when the count-number of the counter 10 reaches a predetermined target count-number $N_0$ which corresponds to a cycle time $T_0$ which corresponds to a desired target speed, to which the motor rotation is speed-controlled. The gate circuit 12 then outputs a target-speed detection signal GJUST. Input terminals of a second gate circuit 18, constituted by an AND gate for example, are selectively connected to bit-outputs of the first counter 10 so as to detect when the count-number of the counter 10 reaches a predetermined first reference count-number $N_a$. The gate circuit 18 then outputs a high level (referred to hereinafter as H) signal. The value of the count-number $N_a$

will be described below.

When an H output of the gate circuit 18 is input to a reset-signal generator 20, the reset-signal generator 20 outputs a reset signal $RST_b$ to a second counter 22.

The second counter 22 is permanently preset with a predetermined second reference count-number $N_b$ and counts clock pulses input to its clock terminal CLK (after it is cleared by the reset signal $RST_b$) and outputs a second target speed detection signal GJUST-II when it counts up to the preset count-number. The first reference count-number $N_a$ is chosen to be lower than a lowest probable count-number which might be counted by the first counter, for instance lower than a count-number corresponding to a future lowest limit of tolerance for motor rotation speed control. The second reference count-number $N_b$ is chosen to correspond to the difference between the target count-number $N_0$ and the first reference count-number $N_a$, that is:-

$$N_b = N_0 - N_a.$$

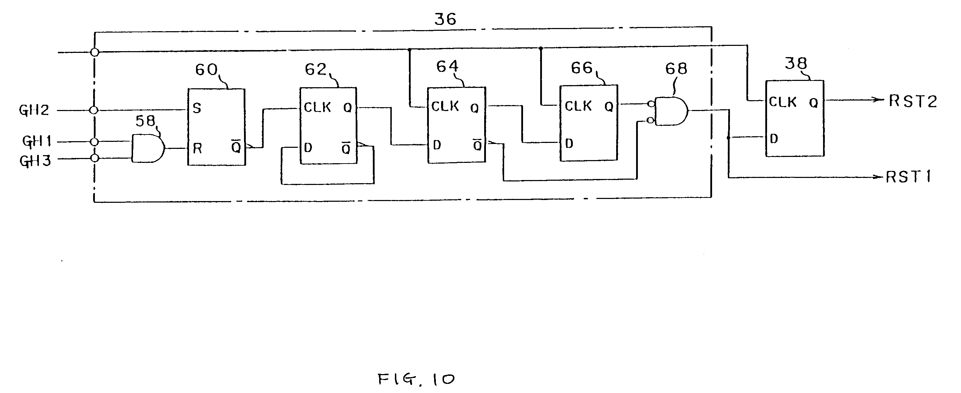

Operation of the circuit of Fig. 4 is illustrated in Fig. 5, for a case in which motor rotation speed is faster than the target rotation speed.

After the first counter 10 is reset by a reset signal RST, the first counter 10 starts to count clock pulses. When the count-number of the first counter 10 reaches the first reference count-number $N_a$, all the inputs to the second gate circuit 18 become H so that the gate circuit 18 outputs N, which causes clearing, i.e. resetting of the second counter 22. After being cleared, the second counter 22 starts to count clock pulses. When the count-number of the second counter 22 reaches the preset number, i.e. the second reference count-number $N_b$, the second counter outputs a carry signal H, i.e. the second target speed detection signal GJUST-II. The second target speed detection signal GJUST-II is output at a timing at which the first counter 10 would (if the motor rotation speed were not fast) count the target count-number $N_0$, i.e. when the first gate circuit 12 would output the first target speed detection signal GJUST. The signal GJUST cannot, however, be output because the first counter 10 has already been cleared by the next reset signal RST. The timing at which the lost first target speed detection signal GJUST would be output is indicated by a broken line in Fig. 5. Thus, the second target speed detection signal GJUST-II is utilised in place of the lost first target speed detection signal GJUST. The first or second target speed detection signal GJUST or GJUST-II is used for measuring a deviation D' of the motor rotation speed from the target rotation speed, and can thus be applied to speed control.

When the motor speed is slower than the target speed, the target reference count-number $N_0$ can be fully counted by the first counter 10, so as to cause output of the first target speed detection signal GJUST from the first gate circuit 12, because the first counter 10 is not prematurely cleared by the next reset signal (as illustrated in Fig. 2).

In some embodiments of the present invention GJUST, i.e. the first gate circuit 12, may be dispensed with entirely, so that GJUST-II is used always as the target speed detection signal.

Referring to Figs. 6 and 7, a preferred embodiment of the present invention having features in accordance with the basic schematic of Fig. 4 but also including additional features (e.g. generation of GFAST, GSLOW, etc.) is described in detail.

Inputs and outputs to and from a motor rotation speed control circuit 100 packed or comprised in an LSI are as follows.

The motor rotation speed control circuit 100 has input thereto: external clock pulses (CLOCK) having a predetermined frequency; rotation signals GH1 to GH3 derived from three-phase Hall-effect elements detecting motor rotation; and a TIEUP signal which is fixed at H.

The motor rotation speed control circuit 100 outputs:-

a speed-decreasing control signal DEC and a speed-increasing control signal INC, which are supplied via switches 102 to a charge pump 104 constituted by a CR time-constant circuit (not shown in the Figure), so that, for example, when the speed-decreasing control signal DEC is L, the voltage of the CR time-constant circuit of the charge pump 104 is discharged via the switch 102 so as to decrease motor speed and, on the other hand, when the speed-increasing control signal INC is L, the capacitor of the charge pump 104 is charged via the switch 102 so as to increase motor speed. When tolerance limits for motor speed are set at, for example, $\pm 0.5\%$ of the target speed, and when a tolerance limit is exceeded, a spindle alarm signal is output in order, for example, to control other related circuits.

Connection pins 40' from each bit-output of the first counter 10 and connection pins 40" from each input terminal of AND gates 12, 14, 16 and 18, for setting count-numbers to be detected, are led out of a package housing the circuitry of Fig. 6. An area surrounded by chain lines 40 denotes the exterior of the package. Details of external connections of pins 40' and 40" will be described below.

The rotation signals GH1 to GH3 are output from three-phase Hall-effect elements to a reset-signal (or clear signal) forming circuit 36, in which a first reset signal RST1 is generated for each single rotation of the motor. Details of the reset-signal forming circuit will be described below. The first reset signal RST1 output from the reset-signal forming circuit 36 is input to first counter 10 and to a D terminal of a D-FF (D-type flip-flop) 38, which then outputs a second reset-signal RST2 delayed from the first reset signal RST1 by a single clock cycle time, in response to a clock pulse input to its clock terminal CLK.

The first counter 10 receives clock pulses at its clock terminal CLK, and the first reset-signal RST1 at its clear terminal CLR. On receiving the first reset-signal RST1, the count-number which has previously been counted in the first counter 10 is cleared, and the first counter 10 resumes counting clock pulses until, in response to completion of another rotation of the motor, the next first reset signal RST1 is received. Details of the first counter 10 will be described below.

As described above, each of the bit-outputs of the first counter 10 is led out at an external connection pin 40', and each of the input terminals of the AND gate 12, as the first gate circuit of Fig. 4, of AND gate 18, as the second gate circuit of Fig. 4, and of an AND gate 14 and of an AND gate 16, is led out at external connection pin 40". Pins 40" (inputs of the AND gates 12, 14, 16 and 18) are selectively connected to pins 40' (outputs of the first counter 10) by external connection leads 40''', which are provided outside the LSI package of the motor speed control circuit 100. Selection of the connection pins 40' to which inputs of respective AND gates are to be connected is such that the count-numbers which the AND gates are to detect are determined or defined by the composition of the selected connection pins 40', i.e. combination of the connected bit-outputs of the first counter 10. A single connection pin 40' from the first counter 10 may be connected to a plurality of connection pins 40" of the AND gates.

Assuming the count-number $N_0$ to be detected by AND gate 12 and corresponding to the target speed is $N_0 = 4800$, then four bit-outputs, corresponding respectively to count digits [64], [128], [512] and [4096], of the first counter 10, are connected to the input terminals of the AND gate 12. Consequently, the AND gate 12 outputs the target-speed detection signal GJUST, which is H, when the counted number 4800 $= 64 + 128 + 512 + 4096$ is detected from the counter 10, in other words, when all of these four bit-outputs are H.

AND gate 14 is for detecting a predetermined faster limit of the rotation speed so as to output a fast-speed detection signal GFAST. Assuming the tolerance limits for motor rotation speed are $\pm 0.5\%$ of the target speed, the input terminals of the AND gate 14 are selectively connected to the connection pins 40' so that corresponding bit-outputs of the first counter 10 make up the count-number $(N_0 - \Delta N) = 4776$ which is 0.5% less than 4800, $N_0$. Accordingly, on detecting the count-number [4776], AND gate 14 outputs the fast-speed detection signal GFAST. Furthermore, in a similar manner, the input terminals of the AND gate 16 are selectively connected so that the AND gate 16 outputs the slow-speed detection signal GSLOW, on detecting a count-number $(N_0 + \Delta N) = 4824$, which is 0.5% more than the target count-number $N_0$, corresponding to a predetermined slower limit of the motor rotation.

The first reference count-number $N_a$ for this embodiment is chosen as [4608] which is smaller than the count-number [4776] corresponding to the fast speed limit of the rotation speed, and furthermore, is even smaller than a count-number corresponding to a most extreme probable fast speed limit of rotation speed which might be contemplated even in any future modification of the specification of motor rotation speeds and limits. The count-number 4608 is provided by connecting the bit-outputs for count digits [512] and [4096] of the first counter 10 to inputs of AND gate 18. On detecting [4608], AND gate 18 outputs an H signal of H.

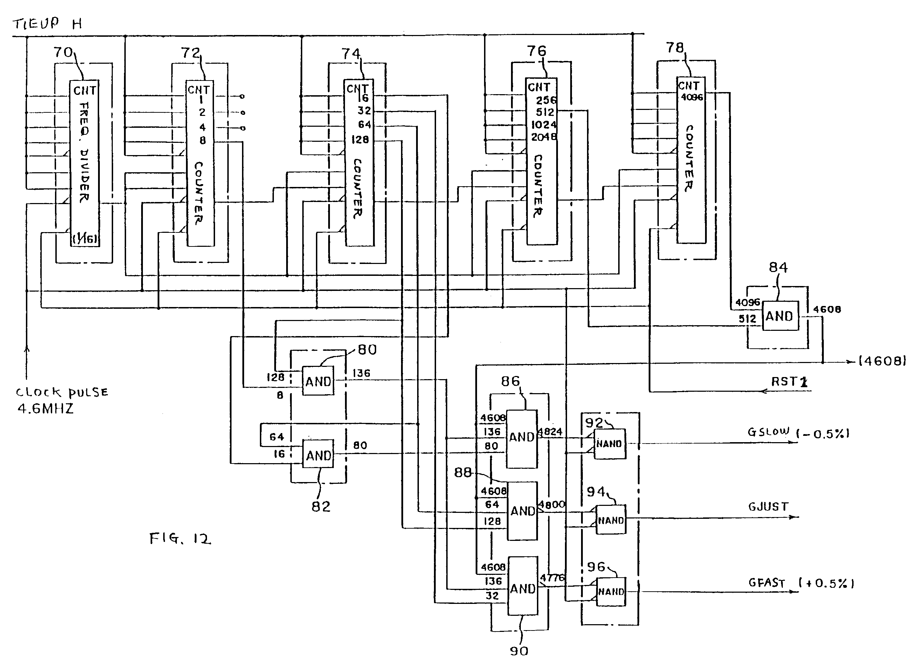

An H output of AND gate 18 is input to a D terminal of D-FF (D-type flip-flop) 20a. A clock pulse terminal CLK of D-FF 20a receives the clock pulses. The $\overline{Q}$ output of D-FF 20a is input to a clear terminal $\overline{\text{CLR}}$ of the second counter 22 and to a clock terminal CLK of another D-FF (D-type flip-flop), whose D terminal receives the H-level of TIEUP. Clear terminal CLR of D-FF 20b receives an inverted version of the second reset-signal RST2. The $\overline{Q}$ output of D-FF 20b is input to a clear terminal CLR of D-FF 20a. Therefore, as shown in a timing chart in Fig. 8, when the first-received H output from AND gate 18 to D-FF 20a (D-FF1 in Fig. 8) falls to L level, the $\overline{Q}$ terminal of D-FF 20a (D-FF1) outputs a negative pulse. Pulses output from AND gate 18 later than the first output pulse (the first-received H output) are not output from D-FF 20a. Accordingly, $\overline{Q}$ terminal of the D-FF 20b (D-FF2 in Fig. 8) is L until a next second reset-signal RST2 (more exactly, $\overline{\text{RST2}}$) is input thereto. Thus, the reset-signal forming circuit made up of the two D-FFs, 20a and 20b, outputs a negative reset-signal $RST_b$ to the second counter 22 only when the first pulse of a sequence of pulses output from the AND gate 18 is received, so as to clear a second counter 22. The reset-signal $RST_b$ to the second counter 22 is drawn positive in Figs. 5 and 7 for simplicity of explanation, though it is negative in Figs. 6 and 8. The second counter 22 receives also clock pulses at its clock terminal CLK. Accordingly, after being cleared by D-FF 20a when the first counter 10 counts the first reference count-number $N_a$, the second counter 22 resumes counting clock pulses. The second counter 22 is provided with preset data terminals A, B, C, D, ... to which a preset circuit 42 is connected for permanently presetting the second reference count-number $N_b$, by selectively applying H or L levels to each of the preset data terminals A, B, C, D, ... . The second reference count-number $N_b$ to be preset in the second counter 22 is ($N_0 - N_a$) as described earlier, which is, therefore, 192 = 4800 - 4608 for this embodiment. When the count-number reaches the preset number $N_b$ = 192, the second counter 22 outputs a carry signal, as the second target speed detection signal GJUST-II. Details of the connections to set the count-numbers to be detected will be described below, with reference to Fig. 12.

The motor rotation speed control circuit 100 is further provided with a sub speed-control circuit composed of a latch circuit 44 employing a reset-set type flip-flop (RS-FF), D-FFs (D-type flip-flops) 46, 48 and 50, and gates 52 and 54, so that the sub speed-control circuit is controlled according to the reset signals RST1, RST2, and the first or second target speed detection signals GJUST or GJUST-II.

Operation of the subspeed-control circuit will be described in more detail below, with reference to Fig. 9.

As already indicated, when motor rotation speed is faster than the target speed, the first counter 10 is cleared by a reset signal RST1 before it can count up to the target count-number $N_0$. However, in this circuitry embodying the present invention, instead of the first target speed detection signal GJUST, corresponding to target count-number $N_0$, the carry output is obtained from the second counter 22 as a second target speed detection signal GJUST-II, which then sets D-FF 48 so that the H level of the tieup signal TIEUP is output in inverted form from the $\overline{Q}$ terminal of D-FF 48 so as to input L level to a NAND gate 52. In other words, during the period D' after the reset signal RST2 has cleared D-FF 48 and until the second target speed detection signal GJUST-II sets D-FF 48, 1 i.e. its $\overline{Q}$ output is H. (Strictly, the duration D' in Fig. 7(a) is drawn one clock cycle longer than that of Fig. 9 because of the time delay generated in D-FF 20a). On the other hand, because the first target speed detection signal GJUST is not output, the $\overline{Q}$ output of the latch circuit 44 has been H to set D-FF 46, accordingly, its $\overline{Q}$ output, as a signal +CNTRL to NAND gate 52, is H. Therefore, an output DEC of NAND gate 52 is L during the period D'. The L output from the NAND 52 makes a switch (not shown in the Figure) in a switch circuit 102 conductive, to discharge a capacitor in a CR time-constant circuit (not shown in the Figure) of a charge pump 104, in order to decrease the motor rotation speed. Thus, the motor is decelerated during the period D', the deviation from the target cycle time.

On the other hand, when the motor rotation speed is slower than the target speed, on detection of the target count-number $N_0$ by the AND gate 12, the first target speed detection signal GJUST from AND gate 12 sets a D-FF 50 so that the Q output of D-FF 50 to a NAND gate 54 is made L. Therefore, during the period D" between the first target speed detection signal GJUST and the second reset signal RST2, a signal INC output from NAND gate 54 is L, which makes another switch (not shown in the Figure) in the switch circuit 102 conductive to charge the capacitor of the CR time-constant circuit in the charge pump 104 in order to increase the motor rotation speed. Thus, the motor is accelerated during the period D", the deviation of the rotation cycle time of the motor from the target rotational speed.

Furthermore, the fast-speed detection signal GFAST and the slow-speed detection signal GSLOW are input to an alarm detection circuit 56, to which the reset signals RST1 and RST2 are also input, so that the alarm detection circuit 56 can check for existence of a fast-speed detection signal GFAST, etc., in order to output control signals to a related external circuit.

Fig. 10 shows an example of circuit constitution of a reset-signal forming circuit 36 for the motor rotation speed control circuit 100 of Fig. 6. The reset-signal forming circuit 36 comprises:- an AND gate 58 to which the rotation signals GH1 and GH3 are input from the three-phase Hall elements; a latch circuit 60 composed of an RS-FF (reset-set flip-flop) which is reset by an output of AND gate 58 and set by signal GH2 from the three-phase Hall element; a D-FF (D-type flip-flop) 62 whose clock terminal CLK is connected to a $\overline{Q}$ output of latch circuit 60; a D-FF 64 whose D terminal is connected to a Q output of D-FF 62 and whose clock terminal CLK is connected to receive the clock pulses; a D-FF 66 whose D terminal is connected to a Q output of D-FF 64 and whose clock terminal is connected to receive the clock pulses; and an AND gate 68 which has inverting input connected with the Q output of D-FF 66 and the $\overline{Q}$ output of D-FF 64.

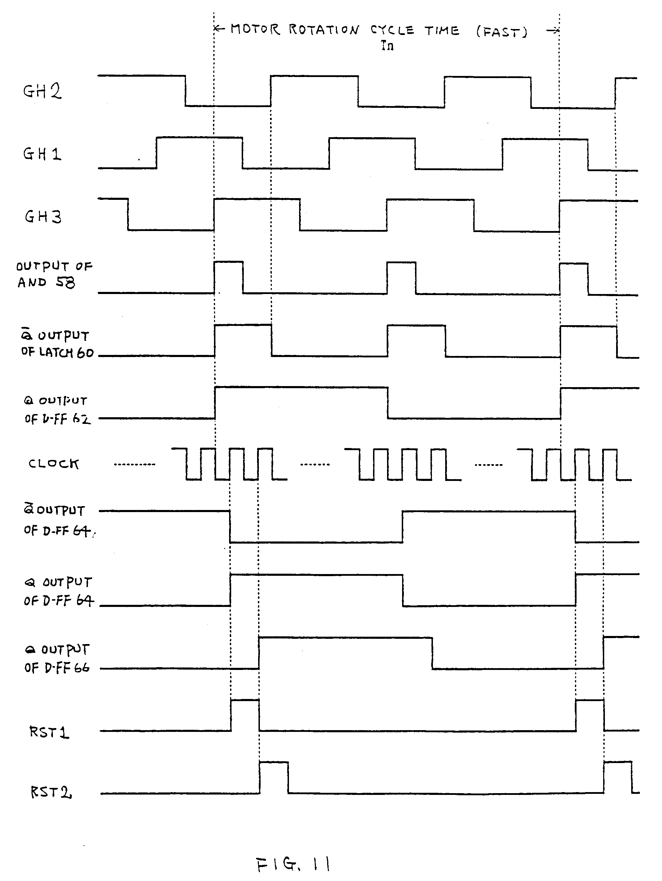

Fig. 11 shows timing charts illustrating operation of the reset-signal forming circuit 36 of Fig. 10. Rotation signals GH1 to GH3 from the three-phase Hall elements provided in the motor are sequentially generated with predetermined phase shifts with respect to the motor rotation cycle time $T_n$, the motor rotation cycle time $T_n$ being given by, for example, two cycles of the three-phase Hall element input GH3 as seen in the Figure. Thus, processed by AND gate 58, flip-flops 60, 62, 64 and 66 and AND gate 68, the rotation signals GH1 to GH3 are converted to the first reset signal RST1 having a pulse width equal to a clock cycle, output from AND gate 68 in synchronisation with a single motor rotation having a cycle time $T_n$, and then the D-FF 38 outputs the second reset signal RST2, which is one clock-cycle delayed from the first reset signal RST1.

Referring to Fig. 12, more details of the first counter 10 and AND gates 12, 14, 16 and 18 of Fig. 6 are hereinafter described. Though the chain-lined frames are separated from each other, parts inside those frames are all inside a single LSI package, and outside the frames connections are established by connection leads 40‴ as shown in Fig. 6 and by leads to external circuits.

The first counter 10 comprises a frequency dividing counter 70, and counters 72, 74, 76 and 78 each being a four-bit counter. The frequency dividing counter 70 is preset so as to divide the clock frequency to one-sixteenth (1/16) of its original value, and the divided-frequency clock signal is then input to the next counter 72. Counter 72 generates bit-outputs corresponding to counts or count-numbers [1, 2, 4, 8], and outputs a carry at the count-number [8] to the next counter 74. Counter 74 has bit-outputs corresponding to counts (of frequency-divided clock pulses) or count-numbers [16, 32, 64, 128], and outputs a carry to the next counter 76 at the count-number [128]. Counter 76 generates bit-outputs corresponding to counts or count-numbers [256, 512, 1024, 2048], and outputs a carry at the count-number [2048] to the next counter 78. The last counter 78 generates a bit-output corresponding to count-number [4096]. Bit-outputs, corresponding to respective selected count-numbers of counters 72, 74, 76, 78 are selectively input to AND gates 80, 82, 84, 86, 88 and 90. Each bit of the counters 70 to 78 is enabled by an application of a high level H of a tieup signal TIEUP.

In this example, the target count-number $N_0 = 4800$ is to be detected by AND gate 88 in Fig. 12, and the count-number for the lower speed limit, i.e. [4824], which is 0.5% larger than $N_0 = 4800$, is to be detected by AND gate 86, and moreover, the count-number for the higher speed limit 4776, which is 0.5% smaller than $N_0 = 4800$, is to be detected by AND gate 90. In order for these AND gates to detect each count-number as above-described, the input terminals of the AND gates are connected to the counters 72 to 78 as follows. The bit-outputs of the count-number [8] of counter 72 and the count-number [128] of counter 74 are input to AND gate 80 so as to provide an output corresponding to count-number [136] which is the sum of the inputs; and AND gate 82 is input with bit-outputs of the count-numbers [16] and [64] of counter 74 so as to provide an output corresponding to the count-number [80], the sum of the inputs; moreover, bit-outputs of the count-number [512] of counter 76 and the count-number [4096] of counter 78 are input to AND gate 84 so as to provide an output corresponding to the count-number [4608] which is the sum of the inputs. The outputs of AND gates 80, 82, 84 are selectively input to AND gates 86, 88, 90. In other words, as the gate circuit 14 of Fig. 6, AND gate 86 is arranged to receive the outputs from AND gates 80, 82, 84, so as to generate a count-number which is the sum of the three received count-numbers [80 + 136 + 4608 = 4824]. Furthermore, as the first gate circuit 12, AND gate 88 is input with three numbers, i.e. the output of AND gate 84 and count-numbers [64] and [128] of counter 74 so as to detect a count-number corresponding to the sum of the count-numbers of these three inputs [64 + 128 + 4608 = 4800]. As the gate circuit 16, AND gate 90 is input with the output of AND gates 80, 84 and a bit-output of count-number [32] of counter 74 so as to detect a count-number of a sum of these three inputs [32 + 136 + 4608 = 4776].

Each output of AND gates 86, 88, 90 is input to the following NAND gates 92, 94, 96 in synchronisation with clock pulses, so that NAND gate 94 outputs the target speed detection signal GJUST, NAND gate 92 outputs the slow-speed detection signal GSLOW, and NAND gate 96 outputs the fast-speed detection signal GFAST.

AND gate 84, as the second AND gate 18, is input with the bit-output [4096] of counter 78 and the bit-output 512] of counter 76 so as to detect the count-number $N_a$ = [4608], the sum of the inputs.

Assuming the frequency of the clock pulses as 4.6 MHz, the cycle time of the output of the target speed detection signal GJUST is given by:-

(target count - number $N_0$ x dividing number) / (clock - frequency) = 4800 x 16 / 4.6 x 10⁶ = 0.0167 μs.

Therefore, the number of motor rotations per minute is given by:-

60 x (1/0.0167) = 3593 ≃ 3600 rpm.

If the target motor speed 3600 rpm is to be modified to 4800 rpm, the target count-number $N_0$ = 4800 must be modified to be 3594]. The count-number [3594] is composed of five bit-outputs, [2048, 1024, 512, 8, 2] of counters 72 to 78. Accordingly, circuit connections are modified so that these bit-outputs are gathered to be input to AND gate 88. The connections of the outputs of the counter 10 to the AND gate 18 are also modified so that $N_a$ = $N_0$ - $N_b$ = 3594 - 192 = 3402. If upper and lower limits of the target speed are ±0.5%, each of bit-outputs of counter 10 is connected to the input terminals of AND gates 90 and 86 so as to provide a count-number [3576], which is 5% less than the modified target count-number [3594], for fast-speed detection, and a count number [3612], which is 0.5% more than the modified target count-number 3594, for slow-speed detection.

Thus, the modifications of the count-numbers to be detected by AND gates 86, 84, 88 and 90 are easily accomplished by modifying the external connections of the external pins of the input/output terminals of the counter 10 and AND gates 16 to 18 led out of the LSI package.

Moreover, even when the target motor speed is modified, the count-number $N_b$ = 192 of the second counter 22 can be kept without modification. Accordingly, no connection pins for setting the second counter 22 are required to be externally led out of the package, resulting in elimination of as many as eight connection pins in the case of the above-described embodiment. Thus, the package size as well as the cost of the LSI can be reduced.

Though in the above-described preferred embodiment, each of gate circuits 12, 14 and 16 is formed of a serially connected plurality of AND gates having two and three input terminals, each gate circuit may be formed with an arbitrary circuit configuration, of gates having arbitrary numbers of input terminals, so long as the requirements of the circuitry specification are fulfilled.

Though in the above-described preferred embodiment, all bit-outputs including those for count-numbers [1, 2, 4] are led out, some of the bit-outputs, such as [1 and 2], need not be led out.

Though in the above-described preferred embodiment, clock pulses originally provided for other circuits are utilised for counting, the clock pulses to be counted (by the main counters, e.g. 10 and 22) may be frequency-divided before being input to the counters.

In counter circuitry embodying the present invention, for example a motor rotation speed control circuit embodying the present invention, fabricated in an LSI, a first counter, after being reset upon each rotation of the motor, resumes counting clock pulses. Bit-outputs of the first counter are led out of the LSI package and are selectively connected to led-out input terminals of at least one AND gate, each of which detects counting, by the first counter, of a count-number determined by the sum of the count numbers designated by bit-outputs of the first counter connected to the AND gate. One AND gate detects a first reference count-number $N_a$, which is smaller than a probable least count-number corresponding to, for example, a lower limit of tolerance of motor speed, even taking into consideration possible future changes of the desired motor speed. After being reset upon detection of $N_a$, a second counter, preset with a second reference count-number $N_b$, starts to count the clock pulses. $N_b$ is chosen so that $N_a$ + $N_b$ = $N_0$, $N_0$ being a target count-number corresponding to a target cycle time of a single motor rotation. A carry signal from the second counter can be used instead of a signal indicating a count of $N_0$ clock pulses by the first counter, even when motor rotation is faster than the target speed. If motor speed has to be modified, the count-numbers for detection can easily be modified by changing the external connections of the led-out terminals. The fixed count-number of the second counter eliminates the need to lead out connections for presetting the second counter, resulting in reduced size and cost of the LSI package.

The counter circuitry may, of course, be applied in appropriate contexts other than motor speed control.

When applied in the context of motor speed control, reset signals for the first counter may be generated every n (n > 1) rotations of the motor, or in response for example to successive equal angular or linear displacements of a member.

## Claims

1. Counter circuitry, comprising:-

a first counter (10) for counting clock pulses input thereto, during an interval between consecutive first reset-signals (RST1) each of which clears the first counter;

a first gate circuit (12) operable to detect when the first counter reaches a predetermined target count-number ($N_0$), corresponding to a desired count-number, and to provide first target detection signal (GJUST);

a second gate circuit (18) operable to detect when the first counter reaches a predetermined first reference count-number ($N_a$) and to generate a first reference count-number detection signal;

a reset-signal generator (20) operable to provide a second reset-signal ($RST_b$) in response to initial generation of the first reference count-number detection signal ($N_a$); and

a second counter (22), permanently preset with a predetermined second reference count-number ($N_b$) corresponding to a difference between the target count-number ($N_0$) and the first reference count-number ($N_a$), operable to count clock signals input thereto after being reset by said second reset-signal ($RST_b$), the second count providing a second target detection signal (GJUST-II) when it reaches the second reference count-number ($N_b$).

2. Counter circuitry as claimed in claim 1, housed in a package and having connection pins (40', 40''), led out of the package, for the first counter (10) and the first and second gate circuits (12, 18), whereby, by selectively establishing connections between those pins, it can be provided that the first (12) and second (18) gate circuits detect selected, alterable, count-numbers.

3. Counter circuitry as claimed in claim 1 or 2, further comprising:-

a third gate circuit (14) connected to the first counter (10), operable to detect when the first counter reaches a predetermined count-number which corresponds to a predetermined higher tolerance limit.

4. Counter circuitry as claimed in claim 1, 2 or 3 further comprising:-

a fourth gate circuit (16) connected to the first counter (10), operable to detect when the first counter reaches a predetermined count-number which corresponds to a predetermined lower tolerance limit.

5. Counter circuitry as claimed in any preceding claim, included in a motor rotation speed control circuitry wherein said consecutive first reset signals are generated in respective consecutive rotations of the motor to be controlled, and said predetermined target count-number ($N_0$) corresponds to a desired target motor speed.

6. Counter circuitry as claimed in claim 4, included in a motor rotation speed control circuitry wherein the predetermined lower and higher tolerance limits are motor rotation speed limits.

**Patentansprüche**

1. Zählschaltungsanordnung, umfassend:

einen ersten Zähler (10) zum Zählen der Taktpulse, die ihm während eines Intervalls zwischen aufeinanderfolgenden ersten Rücksetzungssignalen (RST1), von denen jedes den ersten Zähler löscht, eingegeben werden;

eine erste Gatterschaltung (12), die betreibbar ist, um festzustellen, wenn der erste Zähler eine vorbestimmte Sollzählzahl ($N_0$) erreicht, die einer gewünschten Zählzahl entspricht, und um ein erstes Sollfeststellungssignal (GJUST) zu liefern;

eine zweite Gatterschaltung (18), die betreibbar ist, um festzustellen, wenn der erste Zähler eine vorbestimmte erste Bezugszählzahl ($N_a$) erreicht, und um ein erstes Bezugszählzahlfeststellungssignal zu erzeugen;

ein Rücksetzungssignalgenerator (20), der betreibbar ist, um ein zweites Rücksetzungssignal ($RST_b$) als Antwort auf die anfängliche Erzeugung des ersten Bezugszählzahlfeststellungssignals ($N_a$) zu liefern; und

einen zweiten Zähler (22), der dauerhaft mit einer vorbestimmten zweiten Bezugszählzahl ($N_b$) voreingestellt ist, die einer Differenz zwischen der Sollzählzahl ($N_0$) und der ersten Bezugszählzahl ($N_a$) entspricht, und der betreibbar ist, um die Taktsignale zu zählen, die dort eingegeben werden, nachdem er durch das zweite Rücksetzungssignal ($RST_b$) zurückgesetzt worden ist, wobei der zweite Zähler ein zweites Sollfeststellungssignal (GJUST-II) liefert, wenn er die zweite Bezugszählzahl ($N_b$) erreicht.

2. Zählschaltungsanordnung nach Anspruch 1, die in einem Gehäuse untergebracht ist und Verbindungspins (40', 40''), die aus dem Gehäuse herausgeführt sind, für den ersten Zähler (10) und die erste und zweite Gatterschaltung (12, 18) besitzt, wodurch durch selektives Einrichten von Verbindungen zwischen jenen Pins vorgesehen werden kann, daß die erste (12) und die zweite (18) Gatterschaltung ausgewählte, veränderliche Zählzahlen feststellen.

3. Zählschaltungsanordnung nach Anspruch 1 oder 2, die weiterhin umfaßt:

eine dritte Gatterschaltung (14), die mit dem ersten Zähler (10) verbunden ist und betreibbar ist, um festzustellen, wenn der erste Zähler eine vorbestimmte Zählzahl erreicht, die einer vorbestimmten oberen Toleranzgrenze entspricht.

4. Zählschaltungsanordnung nach Anspruch 1, 2 oder 3, die weiterhin umfaßt:

eine vierte Gatterschaltung (16), die mit dem ersten Zähler (10) verbunden ist und betreibbar ist, um festzustellen, wenn der erste Zähler eine vorbestimmte Zählzahl erreicht, die einer vorbestimmten unteren Toleranzgrenze entspricht.

5. Zählschaltungsanordnung nach einem der vorhergehenden Ansprüche, die in einer Motordrehgeschwindigkeits-Steuerschaltungs anordnung enthalten ist, bei welcher die aufeinanderfolgenden ersten Rücksetzungssignale bei jeweils aufeinanderfolgenden Umdrehungen des zu steuernden Motors erzeugt werden und die vorbestimmte Sollzählzahl ($N_0$) einer gewünschten Sollmotorgeschwindigkeit entspricht.

6. Zählschaltungsanordnung nach Anspruch 4, die in einer Motordrehgeschwindigkeits-Steuerschaltungsanordnung enthalten ist, bei welcher die vorbestimmten oberen und unteren Toleranzgrenzen Motordrehgeschwindigkeitsgrenzen sind.

## Revendications

1. Montage de compteur, comprenant :

un premier compteur (10) pour compter des impulsions d'horloge appliquées à celui-ci, pendant un intervalle entre des premiers signaux de réinitialisation consécutifs (RST1) dont chacun remet à zéro le premier compteur ;

un premier circuit de porte (12) utilisable pour détecter le moment où le premier compteur atteint un nombre de comptages cible prédéterminé ($N_0$), correspondant à un nombre de comptages voulu, et pour fournir un premier signal de détection cible (GJUST) ;

un second circuit de porte (18) utilisable pour détecter le moment où le premier compteur atteint un premier nombre de comptages de référence prédéterminé ($N_a$) et pour générer un premier signal de détection du nombre de comptages de référence ;

un générateur de signal de réinitialisation (20) utilisable pour fournir un second signal de réinitialisation ($RST_b$) en réponse à une génération initiale du premier signal de détection du nombre de comptages de référence ($N_a$) ; et

un second compteur (22) préréglé de façon permanente avec un second nombre de comptages de référence prédéterminé ($N_b$) correspondant à une différence entre le nombre de comptages cible ($N_0$) et le premier nombre de comptages de référence ($N_a$), utilisable pour compter des signaux d'horloge appliqués à celui-ci après avoir été réinitialisé par ledit second signal de réinitialisation ($RST_b$), le second comptage fournissant un second signal de détection cible (GJUST-II) lorsqu'il atteint le second nombre de comptages de référence ($N_b$).

2. Montage de compteur selon la revendication 1, logé dans un boîtier et ayant des broches de connexion (40′, 40″); sorties du boîtier, pour le premier compteur (10) et les premier et second circuits de porte (12, 18), de sorte qu'en établissant de façon sélective des connexions entre ces broches, il peut être prévu que les premier (12) et second (18) circuits de porte détectent des nombres de comptages sélectionnés, modifiables.

3. Montage de compteur selon la revendication 1 ou 2, comprenant en outre :

un troisième circuit de porte (14) relié au premier compteur (10), utilisable pour détecter le moment où le premier compteur atteint un nombre de comptages prédéterminé qui correspond une limite de tolérance plus élevée prédéterminée.

4. Montage de compteur selon la revendication 1, 2, ou 3, comprenant en outre :

un quatrième circuit de porte (16) relié au premier compteur (10) utilisable pour détecter le moment où le premier compteur atteint un nombre de comptages prédéterminé qui correspond à une limite de tolérance inférieure prédéterminée.

5. Montage de compteur selon l'une quelconque des revendications précédentes, y compris dans un montage de commande de vitesse de rotation d'un moteur dans lequel lesdits premiers signaux de réinitialisation consécutifs sont générés lors des rotations respectives consécutives du moteur à commander, et ledit nombre de comptages cible prédéterminé ($N_0$) correspond à une vitesse de moteur cible voulue.

6. Montage de compteur selon la revendication 4, y compris dans un montage de commande de vitesse de rotation d'un moteur dans lequel les limites de tolérance inférieure et-supérieure prédéterminées sont des limites de vitesse de rotation d'un moteur.

FIG. 1.

MOTOR ROTATION CYCLE TIME
SLOW MOTOR
(Tn)

RESET

GSLOW — (No + $\Delta N$) COUNTED

GJUST — No COUNTED

GFAST — (No − $\Delta N$) COUNTED

D

To

→ time

FIG. 2

MOTOR ROTATION CYCLE TIME
FAST MOTOR (Tn)
D'

RESET

GSLOW

GJUST

GFAST — (No − $\Delta N$) COUNTED

GJUST − II

$\Delta N$ COUNTED

No COUNTED

To

→ time

FIG. 3

FIG. 4

FIG. 5

FIG. 6

FIG. 7 (a)

FIG. 7 (b)

CLK

AND GATE 18

D-FF1 $\bar{Q}$

$\overline{RST2}$

D-FF2 $\bar{Q}$

FIG. 8

FIG. 9

FIG. 10

FIG. 11

FIG. 12